# EUROPEAN PATENT APPLICATION

(11) **EP 3 537 743 A1**
(43) Date of publication of application: **11.09.2019**
(21) Application number: 17866905.7
(22) Date of filing: 27.10.2017
(51) Int. Cl.: H04W 8/22, H04W 12/06, H04W 12/08, H04W 72/04, H04W 84/12, H04W 88/06

(54) **TERMINAL DEVICE, CORE NETWORK NODE, BASE STATION, SECURITY GATEWAY, DEVICE, METHOD, PROGRAM, AND RECORDING MEDIUM**

(30) Priority: 02.11.2016 JP 2016215220
(71) Applicant: NEC Corporation, Tokyo 108-8001 (JP)
(72) Inventor: OGURA, Daisuke, Tokyo 108-8001 (JP)
(74) Representative: MacDougall, Alan John Shaw
(86) International application number: PCT/JP2017/038902
(87) International publication number: WO 2018/084081

(57) **Abstract**

In order to make it possible to ensure security of communication via a WLAN more flexibly, a terminal apparatus according to an example aspect of the present disclosure includes an information obtaining unit configured to obtain capability information related to capability of the terminal apparatus, and a first communication processing unit configured to transmit the capability information to a mobile communication network. The capability information includes information indicating an authentication scheme supported by the terminal apparatus, or information indicating an encryption scheme for Security Architecture for Internet Protocol (IPsec) supported by the terminal apparatus.

## Description

### BACKGROUND

### Technical Field

The present disclosure relates to a terminal apparatus, a core network node, a base station, a security gateway, an apparatus, a method, a program and a recording medium.

### Background Art

Currently, in Third Generation Partnership Project (3GPP), development of LTE/WLAN Radio Level Integration with IPsec Tunnel (LWIP) as a data transmission scheme with the use of both of an evolved Node B (eNB) and a wireless local area network access point (WLAN-AP) is ongoing.

In LWIP, a Security Architecture for Internet Protocol (IPsec) tunnel between a user equipment (UE) and a LWIP Security Gateway (LWIP-SeGW) is set, and an encryption function and an authentication function for data transmitted to and received from the LWIP-SeGW are realized.

For example, NPL 1 discloses that Pre-Shared Key (PSK) is used for mutual authentication in setting of an IPsec tunnel between a UE and a LWIP-SeGW. In addition, for example, PTL 1 discloses that a security gateway communicates with a terminal apparatus via a WLAN.

### Citation List

### Patent Literature

[PTL 1] JP 2016-507993 T

### Non Patent Literature

[NPL 1] 3GPP TS 33.401 V13.3.0 (2016-06) "3rd Generation Partnership Project; Technical Specification Group Services and System Aspects; 3GPP System Architecture Evolution (SAE); Security architecture (Release 13)"

### SUMMARY

### Technical Problem

However, for example, PSK is presently used for mutual authentication in setting of an IPsec tunnel between a UE and a LWIP-SeGW according to NPL1. Therefore, other authentication schemes are not used for the mutual authentication (even if the UE supports other authentication schemes which is more secure than PSK).

In addition, an encryption scheme for an IPsec tunnel is not clear in LWIP according to NPL 1. Thus, for example, a negotiation for an encryption scheme may be performed between a UE and a LWIP-SeGW using Internet Key Exchange (IKE) protocol used for setting processing of an IPsec tunnel, and an encryption scheme supported by both of the UE and the LWIP-SeGW may be applied. As an example, an encryption scheme first determined to be supported by both of them may be applied. In this way, it is difficult to control an encryption scheme used by a UE and a LWIP-SeGW on a network side in the present state.

An example object of the present disclosure is to make it possible to ensure security of communication via a WLAN more flexibly.

### Solution to Problem

A terminal apparatus according to an example aspect of the present disclosure includes an information obtaining unit configured to obtain capability information related to capability of the terminal apparatus, and a first communication processing unit configured to transmit the capability information to a mobile communication network. The capability information includes information indicating an authentication scheme supported by the terminal apparatus, or information indicating an encryption scheme for Security Architecture for Internet Protocol (IPsec) supported by the terminal apparatus.

A core network node according to an example aspect of the present disclosure includes an information obtaining unit configured to obtain capability information related to capability of a terminal apparatus, and a communication processing unit configured to transmit the capability information to a base station. The capability information includes information indicating an authentication scheme supported by the terminal apparatus, or information indicating an encryption scheme for IPsec supported by the terminal apparatus.

A base station according to an example aspect of the present disclosure includes an information obtaining unit configured to obtain scheme information indicating an authentication scheme or an encryption scheme to be used for communication between a terminal apparatus and a security gateway via a wireless local area network, and a first communication processing unit configured to transmit the scheme information to the security gateway.

A security gateway according to an example aspect of the present disclosure includes a first communication processing unit configured to receive, from a base station, scheme information indicating an authentication scheme or an encryption scheme to be used for communication between a terminal apparatus and the security gateway via a wireless local area network, and a second communication processing unit configured to perform authentication or encryption for communication with the terminal apparatus via the wireless local area network based on the scheme information.

A first method according to an example aspect of the present disclosure includes obtaining capability information related to capability of a terminal apparatus, and transmitting the capability information to a mobile communication network, wherein the capability information includes information indicating an authentication scheme supported by the terminal apparatus, or information indicating an encryption scheme for IPsec supported by the terminal apparatus.

A first program according to an example aspect of the present disclosure is a program for causing a processor to execute obtaining capability information related to capability of a terminal apparatus, and transmitting the capability information to a mobile communication network, wherein the capability information includes information indicating an authentication scheme supported by the terminal apparatus, or information indicating an encryption scheme for IPsec supported by the terminal apparatus.

A first recording medium according to an example aspect of the present disclosure is a non-transitory computer readable recording medium having recorded thereon a program for causing a processor to execute obtaining capability information related to capability of a terminal apparatus, and transmitting the capability information to a mobile communication network, wherein the capability information includes information indicating an authentication scheme supported by the terminal apparatus, or information indicating an encryption scheme for IPsec supported by the terminal apparatus.

A first apparatus according to an example aspect of the present disclosure includes an information obtaining unit configured to obtain capability information related to capability of a terminal apparatus, and a first communication processing unit configured to transmit the capability information to a mobile communication network, wherein the capability information includes information indicating an authentication scheme supported by the terminal apparatus, or information indicating an encryption scheme for Security Architecture for Internet Protocol (IPsec) supported by the terminal apparatus.

A second apparatus according to an example aspect of the present disclosure includes a memory storing a program, and one or more processors capable of executing the program, wherein the program is a program for causing a processor to execute obtaining capability information related to capability of a terminal apparatus, and transmitting the capability information to a mobile communication network, wherein the capability information includes information indicating an authentication scheme supported by the terminal apparatus, or information indicating an encryption scheme for IPsec supported by the terminal apparatus.

A third apparatus according to an example aspect of the present disclosure includes a memory and one or more processors, wherein the one or more processors are configured to obtain capability information related to capability of a terminal apparatus, and transmit the capability information to a mobile communication network, wherein the capability information includes information indicating an authentication scheme supported by the terminal apparatus, or information indicating an encryption scheme for IPsec supported by the terminal apparatus.

A second method according to an example aspect of the present disclosure includes obtaining capability information related to capability of a terminal apparatus, and transmitting the capability information to a base station, wherein the capability information includes information indicating an authentication scheme supported by the terminal apparatus, or information indicating an encryption scheme for IPsec supported by the terminal apparatus.

A second program according to an example aspect of the present disclosure is a program for causing a processor to execute obtaining capability information related to capability of a terminal apparatus, and transmitting the capability information to a base station, wherein the capability information includes information indicating an authentication scheme supported by the terminal apparatus, or information indicating an encryption scheme for IPsec supported by the terminal apparatus.

A second recording medium according to an example aspect of the present disclosure is a non-transitory computer readable recording medium having recorded thereon a program for causing a processor to execute obtaining capability information related to capability of a terminal apparatus, and transmitting the capability information to a base station, wherein the capability information includes information indicating an authentication scheme supported by the terminal apparatus, or information indicating an encryption scheme for IPsec supported by the terminal apparatus.

A fourth apparatus according to an example aspect of the present disclosure includes an information obtaining unit configured to obtain capability information related to capability of a terminal apparatus, and a communication processing unit configured to transmit the capability information to a base station, wherein the capability information includes information indicating an authentication scheme supported by the terminal apparatus, or information indicating an encryption scheme for IPsec supported by the terminal apparatus.

A fifth apparatus according to an example aspect of the present disclosure includes a memory storing a program, and one or more processors capable of executing the program, wherein the program is a program for causing a processor to execute obtaining capability information related to capability of a terminal apparatus, and transmitting the capability information to a base station, wherein the capability information includes information indicating an authentication scheme supported by the terminal apparatus, or information indicating an encryption scheme for IPsec supported by the terminal apparatus.

A sixth apparatus according to an example aspect of the present disclosure includes a memory and one or more processors, wherein the one or more processors are configured to obtain capability information related to capability of a terminal apparatus, and transmit the capability information to a base station, wherein the capability information includes information indicating an authentication scheme supported by the terminal apparatus, or information indicating an encryption scheme for IPsec supported by the terminal apparatus.

A third method according to an example aspect of the present disclosure includes obtaining scheme information indicating an authentication scheme or an encryption scheme to be used for communication between a terminal apparatus and a security gateway via a wireless local area network, and transmitting the scheme information to the security gateway.

A third program according to an example aspect of the present disclosure is a program for causing a processor to execute obtaining scheme information indicating an authentication scheme or an encryption scheme to be used for communication between a terminal apparatus and a security gateway via a wireless local area network, and transmitting the scheme information to the security gateway.

A third recording medium according to an example aspect of the present disclosure is a non-transitory computer readable recording medium having recorded thereon a program for causing a processor to execute obtaining scheme information indicating an authentication scheme or an encryption scheme to be used for communication between a terminal apparatus and a security gateway via a wireless local area network, and transmitting the scheme information to the security gateway.

A seventh apparatus according to an example aspect of the present disclosure includes an information obtaining unit configured to obtain scheme information indicating an authentication scheme or an encryption scheme to be used for communication between a terminal apparatus and a security gateway via a wireless local area network, and a first communication processing unit configured to transmit the scheme information to the security gateway.

An eighth apparatus according to an example aspect of the present disclosure includes a memory storing a program, and one or more processors capable of executing the program, wherein the program is a program for causing a processor to execute obtaining scheme information indicating an authentication scheme or an encryption scheme to be used for communication between a terminal apparatus and a security gateway via a wireless local area network, and transmitting the scheme information to the security gateway.

A ninth apparatus according to an example aspect of the present disclosure includes a memory and one or more processors, wherein the one or more processors are configured to obtain scheme information indicating an authentication scheme or an encryption scheme to be used for communication between a terminal apparatus and a security gateway via a wireless local area network, and transmit the scheme information to the security gateway.

A fourth method according to an example aspect of the present disclosure includes receiving, from a base station, scheme information indicating an authentication scheme or an encryption scheme to be used for communication between a terminal apparatus and a security gateway via a wireless local area network, and performing authentication or encryption for communication with the terminal apparatus via the wireless local area network based on the scheme information.

A fourth program according to an example aspect of the present disclosure is a program for causing a processor to execute receiving, from a base station, scheme information indicating an authentication scheme or an encryption scheme to be used for communication between a terminal apparatus and a security gateway via a wireless local area network, and performing authentication or encryption for communication with the terminal apparatus via the wireless local area network based on the scheme information.

A fourth recording medium according to an example aspect of the present disclosure is a non-transitory computer readable recording medium having recorded thereon a program for causing a processor to execute receiving, from a base station, scheme information indicating an authentication scheme or an encryption scheme to be used for communication between a terminal apparatus and a security gateway via a wireless local area network, and performing authentication or encryption for communication with the terminal apparatus via the wireless local area network based on the scheme information.

A tenth apparatus according to an example aspect of the present disclosure includes a first communication processing unit configured to receive, from a base station, scheme information indicating an authentication scheme or an encryption scheme to be used for communication between a terminal apparatus and a security gateway via a wireless local area network; and a second communication processing unit configured to perform authentication or encryption for communication with the terminal apparatus via the wireless local area network based on the scheme information.

An eleventh apparatus according to an example aspect of the present disclosure includes a memory storing a program, and one or more processors capable of executing the program, wherein the program is a program for causing a processor to execute receiving, from a base station, scheme information indicating an authentication scheme or an encryption scheme to be used for communication between a terminal apparatus and a security gateway via a wireless local area network, and performing authentication or encryption for communication with the terminal apparatus via the wireless local area network based on the scheme information.

A twelfth apparatus according to an example aspect of the present disclosure includes a memory and one or more processors, wherein the one or more processors are configured to receive, from a base station, scheme information indicating an authentication scheme or an encryption scheme to be used for communication between a terminal apparatus and a security gateway via a wireless local area network, and perform authentication or encryption for communication with the terminal apparatus via the wireless local area network based on the scheme information.

### Advantageous Effects of Disclosure

According to an example aspect of the present disclosure, it is possible to ensure security of communication via a WLAN more flexibly. Note that the present disclosure may exert other advantageous effects instead of the above advantageous effects or together with the above advantageous effects.

### BRIEF DESCRIPTION OF THE DRAWINGS

Figure 1 is an explanatory diagram for describing an example of a network configuration of LWIP assumed in 3GPP.
Figure 2 is an explanatory diagram for describing an example of a protocol stack of LWIP assumed in 3GPP Release-13.
Figure 3 is an explanatory diagram for describing an example of a protocol stack of LWIP assumed in 3GPP Release-14.
Figure 4 is an explanatory diagram illustrating an example of a schematic configuration of a system according to example embodiments of the present disclosure.
Figure 5 is a block diagram illustrating an example of a schematic configuration of a base station according to a first example embodiment.
Figure 6 is a block diagram illustrating an example of a schematic configuration of a security gateway according to a first example embodiment.
Figure 7 is a block diagram illustrating an example of a schematic configuration of a terminal apparatus according to a first example embodiment.
Figure 8 is a block diagram illustrating an example of a schematic configuration of a first core network node according to a first example embodiment.
Figure 9 is an explanatory diagram for describing an example of authentication capability information and encryption capability information according to a first example embodiment.
Figure 10 is a sequence diagram for describing a first example of a schematic flow of processing according to a first example embodiment.
Figure 11 is a sequence diagram for describing a second example of a schematic flow of processing according to a first example embodiment.
Figure12 is a sequence diagram for describing a third example of a schematic flow of processing according to a first example embodiment.
Figure13 is a sequence diagram for describing a fourth example of a schematic flow of processing according to a first example embodiment.
Figure 14 is a block diagram illustrating an example of a schematic configuration of a base station according to a second example embodiment.
Figure 15 is a block diagram illustrating an example of a schematic configuration of a security gateway according to a second example embodiment.
Figure 16 is a block diagram illustrating an example of a schematic configuration of a terminal apparatus according to a second example embodiment.
Figure 17 is a block diagram illustrating an example of a schematic configuration of a first core network node according to a second example embodiment.

### DESCRIPTION OF THE EXAMPLE EMBODIMENTS

Example embodiments of the present disclosure will be described below in detail with reference to the accompanying drawings. Note that, in the present description and drawings, elements to which the same or similar descriptions are applicable are denoted by the same reference signs, whereby overlapping descriptions may be omitted.

Description will be given in the following order.
1. Related Art
2. Overview of Example Embodiments of the Present disclosure
3. Configuration of System according to Example Embodiments of the Present disclosure
4. First Example Embodiment
   4.1. Configuration of Base Station
   4.2. Configuration of Security Gateway
   4.3. Configuration of Terminal Apparatus
   4.4. Configuration of First Core Network Node
   4.5. Technical Features
5. Second Example Embodiment
   5.1. Configuration of Base Station
   5.2. Configuration of Security Gateway
   5.3. Configuration of Terminal Apparatus
   5.4. Configuration of First Core Network Node
   5.5. Technical Features

### <<1. Related Art>>

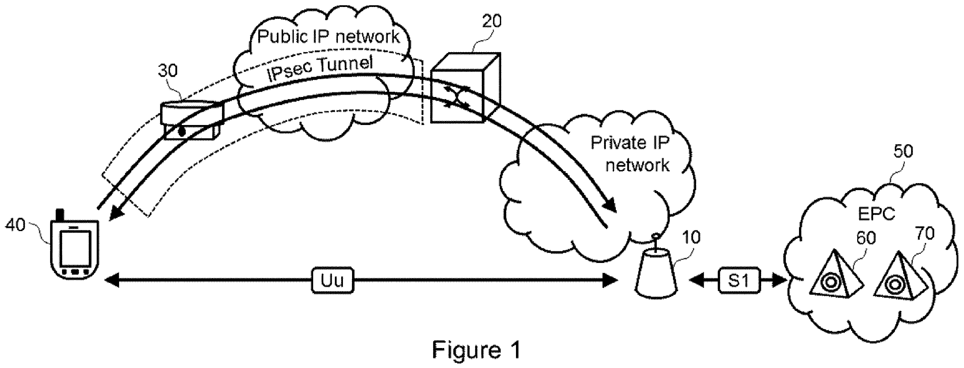

LWIP is described as a related art related to the present example embodiments with reference to Figure 1 to Figure3.

Currently, in 3GPP, development of LWIP as a data transmission scheme with the use of both of an eNB and a WLAN-AP is ongoing.

Figure 1 is an explanatory diagram for describing an example of a network configuration of LWIP assumed in 3GPP. Referring to Figure 1, an eNB 10, a LWIP-SeGW 20, a WLAN-AP 30, a UE 40, a core network 500, a mobility management entity (MME) 60 and a serving gateway (S-GW) 70 are illustrated. In LWIP, the eNB 10 and the UE 40 can transmit and receive data over a Uu interface, and can transmit/receive data to/from each other via the LWIP-SeGW 20 and the WLAN-AP 30. The LWIP-SeGW 20 provides an IPsec tunnel for transmission and reception of data via a WLAN. That is, the LWIP-SGW20 and the UE 40 set an IPsec tunnel and transmit and receive data via a WLAN through the IPsec tunnel.

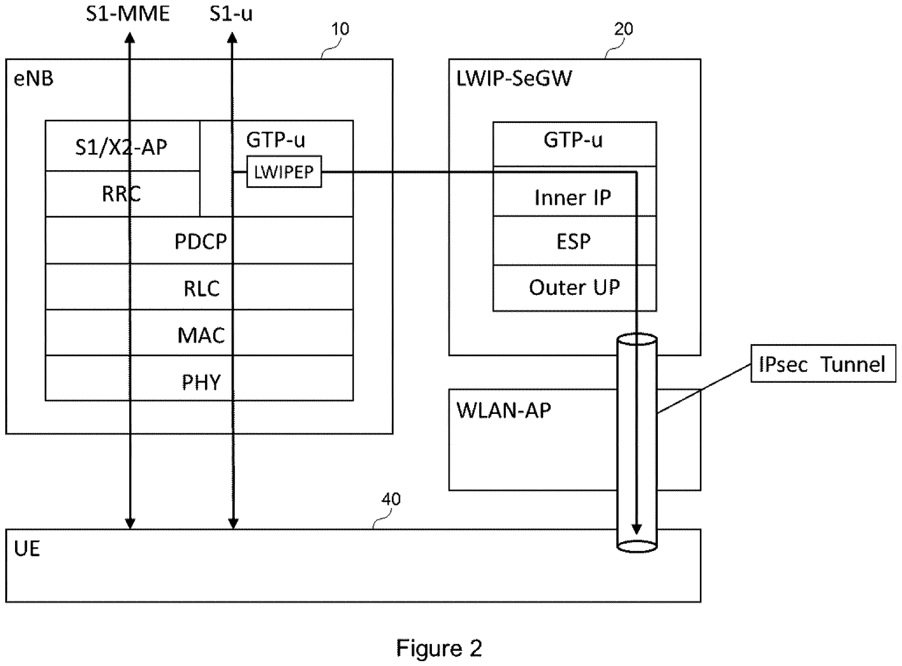

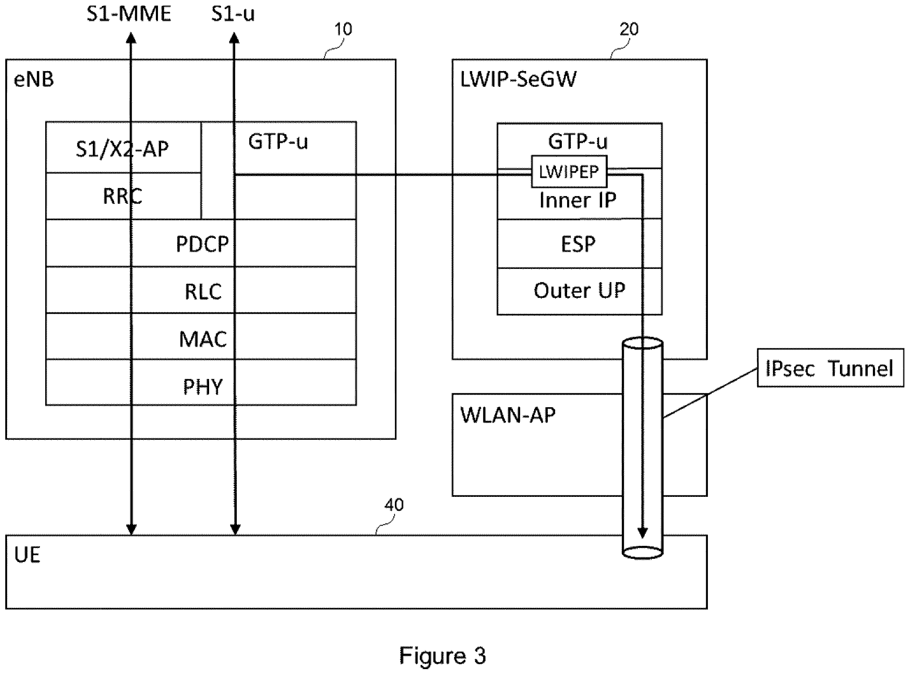

Figure 2 is an explanatory diagram for describing an example of a protocol stack of LWIP assumed in 3GPP Release-13. In addition, Figure 3 is an explanatory diagram for describing an example of a protocol stack of LWIP assumed in 3GPP Release-14. As described in Figure 2 and Figure3, an IPsec tunnel is set between the LWIP-SeGW 20 and the UE 40. The LWIP-SeGW 20 and the UE 40 transmit/receive data to/from each other through the IPsec tunnel. Note that LWIP Encapsulation Protocol (LWIPEP) is located in the eNB 10 in Release-13, and LWIPEP is located in the LWIP-SeGW 20 in Release-14.

### «2. Overview of Example Embodiments of the Present disclosure»

Firstly, an overview of example embodiments of the present disclosure is described.

### (1) Technical Problem

PSK is used for mutual authentication in setting of an IPsec tunnel between a UE and a LWIP-SeGW in the present state according to 3GPP TS 33.401 V13.3.0. Therefore, another authentication scheme is not used for the mutual authentication (even if the UE supports another authentication scheme which is more secure than PSK).

In addition, an encryption scheme for an IPsec tunnel is not clear in LWIP according to 3GPP TS 33.401 V13.3.0. Thus, for example, a negotiation for an encryption scheme may be performed between a UE and a LWIP-SeGW using IKE protocol used for setting processing of an IPsec tunnel, and an encryption scheme supported by both of the UE and the LWIP-SeGW may be applied. As an example, an encryption scheme determined first to be supported by both of them may be applied. In this way, it is difficult to control an encryption scheme used by a UE and a LWIP-SeGW on a network side in the present state.

An example object of the present disclosure is to make it possible to ensure security of communication via a WLAN more flexibly.

### (2) Technical Feature

According to the example embodiments of the present disclosure, for example, a terminal apparatus (UE) transmits capability information related to capability of the terminal apparatus to a mobile communication network (a core network node (MME) or a base station (eNB)). In particular, the capability information includes information indicating an authentication scheme supported by the terminal apparatus, or information indicating an encryption scheme for IPsec supported by the terminal apparatus.

According to the example embodiments of the present disclosure, for example, the core network node (MME) transmits the capability information to a base station (eNB).

According to the example embodiments of the present disclosure, for example, a base station (eNB) transmits, to a security gateway (LWI-SeGW), scheme information indicating an authentication scheme or an encryption scheme to be used for communication between a terminal apparatus (UE) and the security gateway via a wireless local area network.

According to the example embodiments of the present disclosure, for example, the security gateway (LWIP-SeGW) performs mutual authentication or encryption for communication with the terminal apparatus (UE) via a WLAN based on the scheme information.

This makes it possible, for example, to ensure security of communication via a WLAN more flexibly.

### «3. Configuration of System according to Example Embodiments of the Present disclosure»

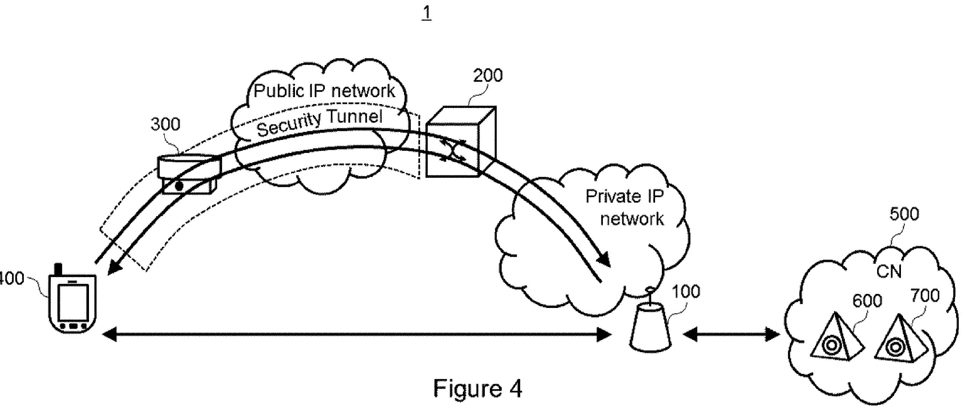

An example of a configuration of a system 1 according to the example embodiments is described with reference to Figure 4. Figure 4 is an explanatory diagram illustrating an example of a schematic configuration of the system 1 according to the example embodiments of the present disclosure. Referring to Figure 4, the system 1 includes a base station 100, a security gateway 200, a WLAN-AP 300, a terminal apparatus 400 and a core network 500.

For example, the system 1 is a system that complies with 3GPP standards. More specifically, the system 1 may be a system that complies with LTE, LTE-Advanced and/or System Architecture Evolution (SAE). Alternatively, the system 1 may be a system that complies with a standard of Fifth Generation (5G). Of course, the system 1 is not limited to these examples.

### (1) Base Station 100

The base station 100 is a node which performs wireless communication with a terminal apparatus. In other word, the base station 100 is a node of a radio access network (RAN). For example, the base station 100 may be an eNB, or may be a generation Node B (gNB) in 5G. The base station 100 may include a plurality of units (or a plurality of nodes). The plurality of units (or plurality of nodes) may include a first unit (or a first node) performing processing of a higher protocol layer, and a second unit (or a second node) performing processing of a lower protocol layer. As an example, the first unit may be referred to as a center/central unit (CU), and the second unit may be referred to as a distributed unit (DU) or an access unit (AU). As another example, the first unit may be referred to as a digital unit (DU), and the second unit may be referred to as a radio unit (RU) or a remote unit (RU). The digital unit (DU) may be a base band unit (BBU), and the RU may be a remote radio head (RRH) or a remote radio unit (RRU). Terms used to refer to the first unit (or first node) and the second unit (or second node) are, of course, not limited to these examples. Alternatively, the base station 100 may be a single unit (or single node). In this case, the base station 100 may be one of the plurality of units (e.g., one of the first unit and the second unit) and may be connected to another one of the plurality of unit (e.g., the other one of the first unit and the second unit).

In particular, according to the example embodiments, the base station 100 can transmit/receive data to/from the terminal apparatus 400 wirelessly (e.g. over a Uu interface), and can transmit/receive data to/from the terminal apparatus 400 via the security gateway 200 and the WLAN-AP300. Specifically, for example, the base station 100 can perform operations of LWIP.

### (2) Security Gateway 200

The Security gateway 200 ensure security of communication via a WLAN. For example, the security gateway 200 provides a security tunnel (an IPsec tunnel) for communication via a WLAN. More specifically, for example, the security gateway 200 is a LWIP-SeGW.

Note that the location is between the base station 100 and the WLAN-AP300 & the terminal apparatus 400.

### (3) WLAN-AP 300

The WLAN-AP 300 is an access point of a WLAN and performs wireless communication with a terminal apparatus (e.g. the terminal apparatus 400) in conformity with one or more of IEEE 802.11 series (IEEE 802.11b/11a/11g/11n/11ac etc.).

### (4) Terminal Apparatus 400

The terminal apparatus 400 performs wireless communication with a base station. For example, the terminal apparatus 400 performs wireless communication with the base station 100 when the terminal apparatus 400 is located in a coverage area of the base station 100. For example, the terminal apparatus 400 is a UE.

Particularly, in the present example embodiments, the terminal apparatus 400 can transmit/receive data to/from the base station 100 wirelessly (e.g. over a Uu interface), and can transmit/receive data to/from the base station 100 via the WLAN-AP 300 and the security gateway 200. Specifically, for example, the terminal apparatus 400 can perform operations of LWIP.

### (5) Core Network 500

The core network 500 includes a first core network node 600 and a second core network node 700.

The first core network node 600 is a node responsible for processing of C-plane. For example, the first core network node 600 transmits a control message to the base station 100, and receives a control message from the base station 100.

The second core network node 700 is a node responsible for processing of U-plane. For example, the second core network node 700 transmits a data packet (a packet including data) to the base station 100, and receives a data packet from the base station 100.

For example, the core network node 500 is an EPC, the first core network node 600 is an MME, and the second core network node 700 is a S-GW.

The system 1 according to the example embodiments of the present disclosure is described above. Note that the base station 100 and the core network 500 (the first core network node 600 and the second core network node 700) are included in a mobile communication network. As an example, the mobile communication network is an Evolved Packet System (EPS).

### «4. First Example Embodiment»

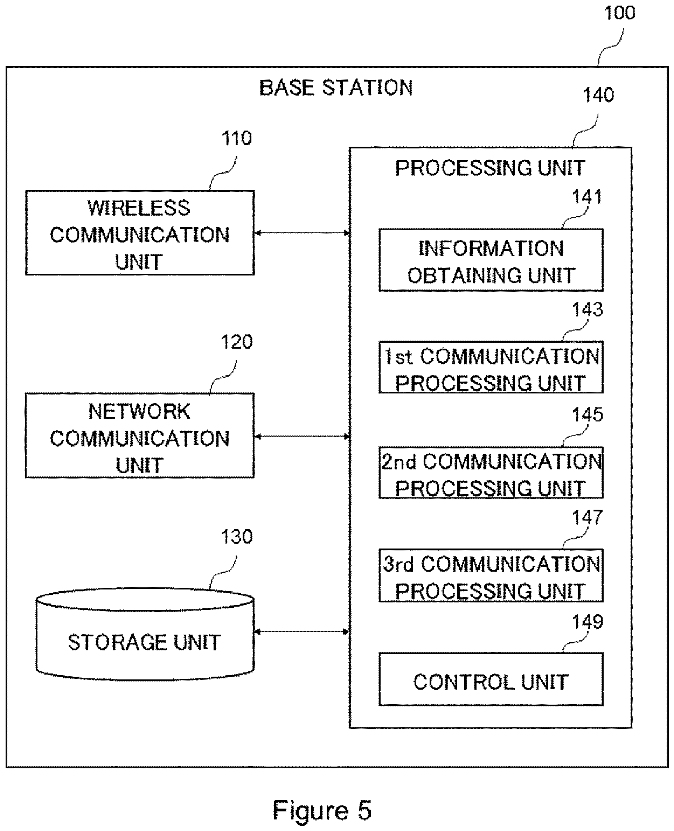

Subsequently, a first example embodiment of the present disclosure will be described with reference to Figure 5 to Figure 13.

### <4.1. Configuration of Base Station>

Firstly, an example of a configuration of the base station 100 according to the first example embodiment is described with reference to Figure 5. Figure 5 is a block diagram illustrating an example of a schematic configuration of the base station 100 according to the first example embodiment. Referring to Figure 5, the base station 100 includes a wireless communication unit 110, a network communication unit 120, a storage unit 130 and a processing unit 140.

### (1) Wireless communication unit 110

The wireless communication unit 110 is configured to wirelessly transmit and receive signals. For example, the wireless communication unit 110 is configured to receive signals from a terminal apparatus and transmit signals to a terminal apparatus.

### (2) Network Communication Unit 120

The network communication unit 120 is configured to receive signals from a network and transmit signals to a network.

### (3) Storage Unit 130

The storage unit 130 is configured to store programs and parameters for operation of the base station 100 as well as various data temporarily or permanently.

### (4) Processing Unit 140

The processing unit 140 is configured to provide various functions of the base station 100. The processing unit 140 includes an information obtaining unit 141, a first communication processing unit 143, a second communication processing unit 145, a third communication processing unit 147, and a control unit 149. Note that the processing unit 140 may further include another constituent element than these constituent elements. That is, the processing unit 140 may perform operations other than the operations of these constituent elements. Specific operations of the information obtaining unit 141, the first communication processing unit 143, the second communication processing unit 145, the third communication processing unit 147, and the control unit 149 will be described in detail later.

For example, the processing unit 140 (the first communication processing unit 143) communicates with the security gateway 200 through the network communication unit 120. For example, the processing unit 140 (the second communication processing unit 145) communicates with a core network node (e.g. the first core network node 600 or the second core network node 700) through the network communication unit 120. For example, the processing unit 140 (the third communication processing unit 147) communicates with a terminal apparatus (e.g. the terminal apparatus 400) through the wireless communication unit 110.

### (5) Example Implementations

The wireless communication unit 110 may be implemented with an antenna, a radio frequency (RF) circuit and the like. The network communication unit 120 may be implemented with a network adapter, a network interface card or the like. The storage unit 130 may be implemented with a memory (for example, non-volatile memory and/or volatile memory), hard disc and/or the like. The processing unit 140 may be implemented with a base band (BB) processor, another processor and/or the like. The information obtaining unit 141, the first communication processing unit 143, the second communication processing unit 145, the third communication processing unit 147 and the control unit 149 may be implemented with the same processor or with respective different processors. The above memory (storage unit 130) may be included in such a processor (a chip).

The base station 100 may include a memory that stores a program and one or more processors that are capable of executing the program, and the one or more processors may execute the operations of the processing unit 140 (the operations of the information obtaining unit 141, the first communication processing unit 143, the second communication processing unit 145, the third communication processing unit 147 and the control unit 149). The program may be a program for causing a processor to execute the operations of the processing unit 140 (the operations of the information obtaining unit 141, the first communication processing unit 143, the second communication processing unit 145, the third communication processing unit 147 and the control unit 149).

### <4.2. Configuration of Security Gateway>

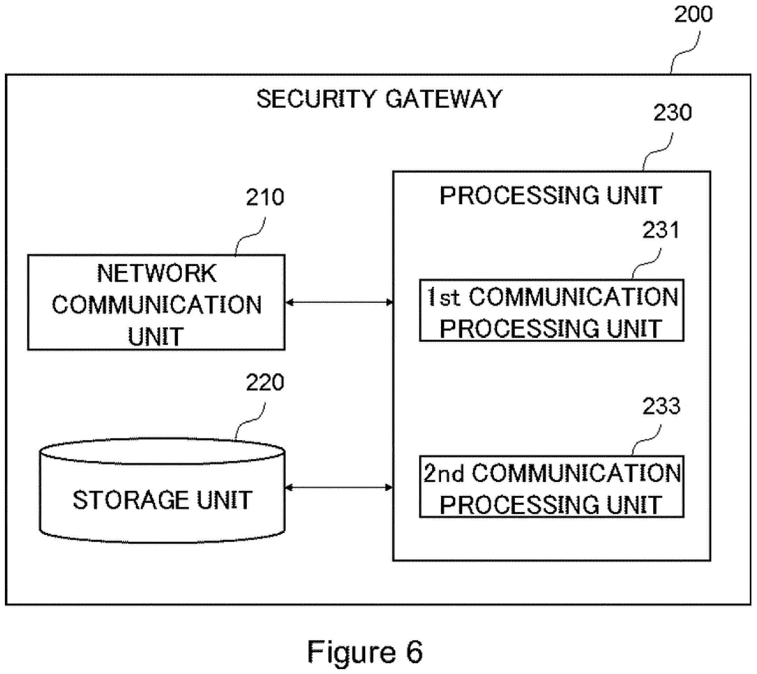

Next, an example of a configuration of the security gateway 200 according to the first example embodiment is described with reference to Figure 6. Figure 6 is a block diagram illustrating an example of a schematic configuration of the security gateway 200 according to the first example embodiment. Referring to Figure 6, the security gateway 200 includes a network communication unit 210, a storage unit 220 and a processing unit 230.

### (1) Network Communication Unit 210

The network communication unit 210 is configured to receive signals from a network and transmit signals to a network.

### (2) Storage Unit 220

The storage unit 220 is configured to store programs and parameters for operation of the security gateway 200 as well as various data temporarily or permanently.

### (3) Processing Unit 230

The processing unit 230 is configured to provide various functions of the security gateway 200. The processing unit 230 includes a first communication processing unit 231 and a second communication processing unit 233. Note that the processing unit 230 may further include another constituent element than these constituent elements. That is, the processing unit 230 may perform operations other than the operations of these constituent elements. Specific operations of the first communication processing unit 231 and the second communication processing unit 233 will be described in detail later.

For example, the processing unit 230 communicates with another node through the network communication unit 210. Specifically, for example, the processing unit 230 (the first communication processing unit 231) communicates with the base station 100 (or a core network node) through the network communication unit 210. In addition, for example, the processing unit 230 (the second communication processing unit 233) communicates with the terminal apparatus 400 via a WLAN (the WLAN-AP 300) through the network communication unit 210.

### (4) Example Implementations

The network communication unit 210 may be implemented with a network adapter, a network interface card or the like. The storage unit 220 may be implemented with a memory (for example, non-volatile memory and/or volatile memory), hard disc and/or the like. The processing unit 230 may be implemented with a processor and/or the like. The first communication processing unit 231 and the second communication processing unit 233 may be implemented with the same processor or with respective different processors. The above memory (storage unit 220) may be included in such a processor (a chip).

The security gateway 200 may include a memory that stores a program and one or more processors that are capable of executing the program, and the one or more processors may execute the operations of the processing unit 230 (the operations of the first communication processing unit 231 and the second communication processing unit 233). The program may be a program for causing a processor to execute the operations of the processing unit 230 (the operations of the first communication processing unit 231 and the second communication processing unit 233).

### <4.3. Configuration of Terminal Apparatus>

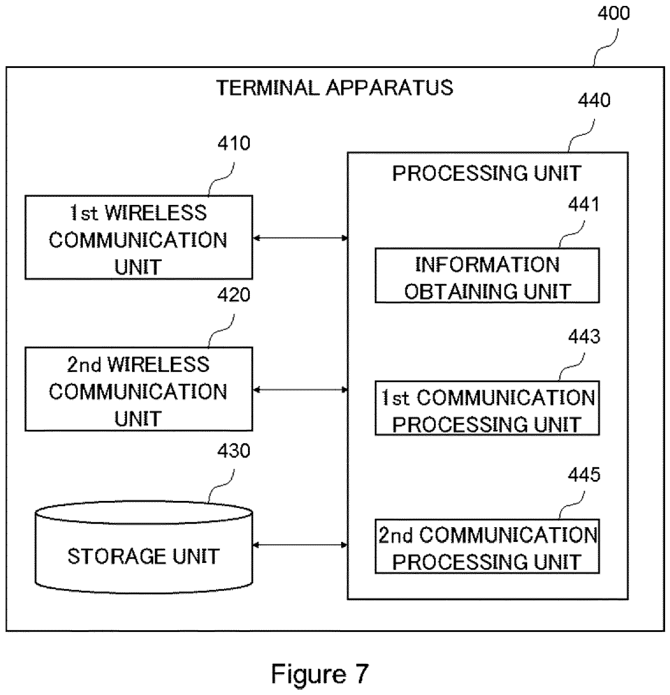

Next, an example of a configuration of the terminal apparatus 400 according to the first example embodiment is described with reference to Figure 7. Figure 7 is a block diagram illustrating an example of a schematic configuration of the terminal apparatus 400 according to the first example embodiment. Referring to Figure 7, the terminal apparatus 400 includes a first wireless communication unit 410, a second wireless communication unit 420, a storage unit 430 and a processing unit 440.

### (1) First Wireless communication unit 410

The first wireless communication unit 410 is configured to wirelessly transmit and receive signals. For example, the first wireless communication unit 410 is configured to receive signals from the base station 100 and transmit signals to the base station 100.

### (2) Second Wireless communication unit 420

The second wireless communication unit 420 is configured to wirelessly transmit and receive signals. For example, the second wireless communication unit 420 is configured to receive signals from the WLAN-AP 300 and transmit signals to the WLAN-AP 300.

### (3) Storage Unit 430

The storage unit 430 is configured to store programs and parameters for operation of the terminal apparatus 400 as well as various data temporarily or permanently.

### (4) Processing Unit 440

The processing unit 440 is configured to provide various functions of the terminal apparatus 400. The processing unit 440 includes an information obtaining unit 441, a first communication processing unit 443 and a second communication processing unit 445. Note that the processing unit 440 may further include another constituent element than these constituent elements. That is, the processing unit 440 may perform operations other than the operations of these constituent elements. Specific operations of the information obtaining unit 441, the first communication processing unit 443 and the second communication processing unit 445 will be described in detail later.

For example, the processing unit 440 (the first communication processing unit 443) communicates with the base station 100 (or a core network node) through the first wireless communication unit410. In addition, for example, the processing unit 440 (the second communication processing unit 445) communicates with the security gateway 200 (or the base station 100) via the WLAN-AP 300 through the second wireless communication unit420.

### (5) Example Implementations

Each of the first wireless communication unit 410 and the second wireless communication unit 420 may be implemented with an antenna, a radio frequency (RF) circuit and the like. The storage unit 430 may be implemented with a memory (for example, non-volatile memory and/or volatile memory), hard disc and/or the like. The processing unit 440 may be implemented with a base band (BB) processor, another processor and/or the like. The information obtaining unit 441, the first communication processing unit 443 and the second communication processing unit 445 may be implemented with the same processor or with respective different processors. The above memory (storage unit 430) may be included in such a processor (a chip).

The terminal apparatus 400 may include a memory that stores a program and one or more processors that are capable of executing the program, and the one or more processors may execute the operations of the processing unit 440 (the operations of the information obtaining unit 441, the first communication processing unit 443 and the second communication processing unit 445). The program may be a program for causing a processor to execute the operations of the processing unit 440 (the operations of the information obtaining unit 441, the first communication processing unit 443 and the second communication processing unit 445).

### <4.4. Configuration of First Core Network Node>

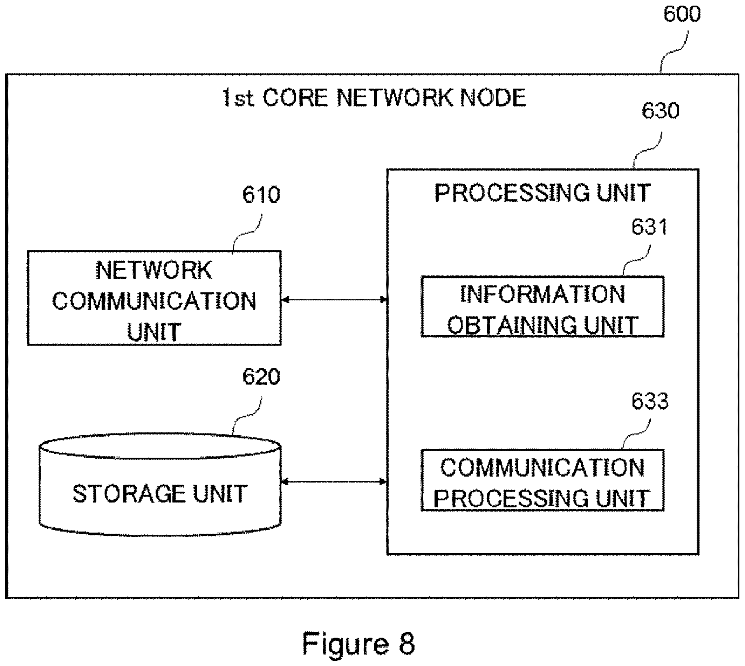

Next, an example of a configuration of the first core network node 600 according to the first example embodiment is described with reference to Figure 8. Figure 8 is a block diagram illustrating an example of a schematic configuration of the first core network node 600 according to the first example embodiment. Referring to Figure 8, the first core network node 600 includes a network communication unit 610, a storage unit 620 and a processing unit 630.

### (1) Network Communication Unit 610

The network communication unit 610 is configured to receive signals from a network and transmit signals to a network.

### (2) Storage Unit 620

The storage unit 620 is configured to store programs and parameters for operation of the first core network node 600 as well as various data temporarily or permanently.

### (3) Processing Unit 630

The processing unit 630 is configured to provide various functions of the first core network node 600. The processing unit 630 includes an information obtaining unit 631 and a communication processing unit 633. Note that the processing unit 630 may further include another constituent element than these constituent elements. That is, the processing unit 630 may perform operations other than the operations of these constituent elements. Specific operations of the information obtaining unit 631 and the communication processing unit 633 will be described in detail later.

For example, the processing unit 630 communicates with another node through the network communication unit 610. Specifically, for example, the processing unit 630 (the communication processing unit 633) communicates with the base station 100 (or another core network node) through the network communication unit 610.

### (4) Example Implementations

The network communication unit 610 may be implemented with a network adapter, a network interface card or the like. The storage unit 620 may be implemented with a memory (for example, non-volatile memory and/or volatile memory), hard disc and/or the like. The processing unit 630 may be implemented with a processor and/or the like. The information obtaining unit 631 and the communication processing unit 633 may be implemented with the same processor or with respective different processors. The above memory (storage unit 620) may be included in such a processor (a chip).

The first core network node 600 may include a memory that stores a program and one or more processors that are capable of executing the program, and the one or more processors may execute the operations of the processing unit 630 (the operations of the information obtaining unit 631 and the communication processing unit 633). The program may be a program for causing a processor to execute the operations of the processing unit 630 (the operations of the information obtaining unit 631 and the communication processing unit 633).

### <4.5. Technical Features>

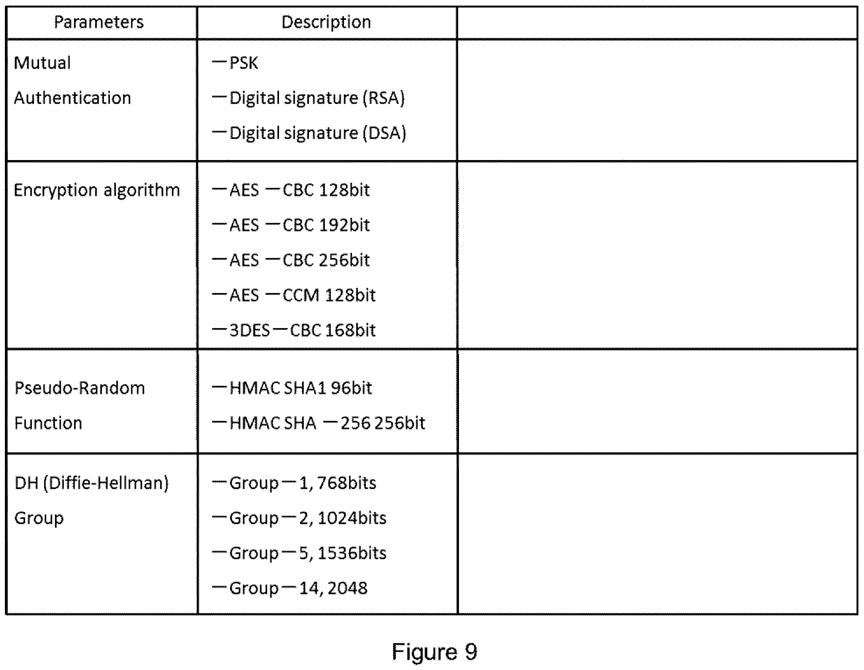

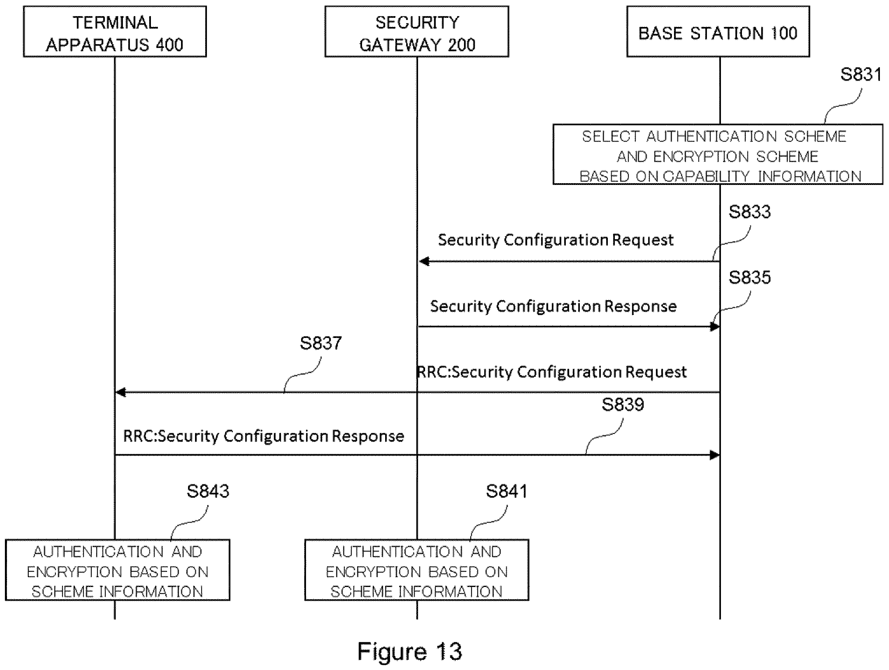

Next, technical features of the first example embodiment are described with reference to Figure 9 and Figure 13.

### (1) Transmission and Reception of Capability Information

The terminal apparatus 400 (the information obtaining unit 441) obtains capability information related to capability of the terminal apparatus 400. Then the terminal apparatus 400 (the first communication processing unit 443) transmits the capability information to a mobile communication network.

### (1-1) Capability Information

Particularly according to the first example embodiment, the capability information includes information indicating an authentication scheme supported by the terminal apparatus 400 (hereinafter referred to as "authentication capability information"), and/or information indicating an encryption scheme for IPsec supported by the terminal apparatus 400 (hereinafter referred to as "encryption capability information"). Note that the authentication scheme may be referred to as a mutual authentication scheme.

### - Authentication Capability Information

For example, the authentication capability information includes information indicating a digital signature scheme supported by the terminal apparatus.

More specifically, for example, the information indicating the digital signature scheme includes at least one of information indicating whether Rivest Shamir Adleman (RSA) is supported and information indicating whether Digital Signature Algorithm (DSA) is supported.

Of course, the authentication capability information may include other information. Specifically, the authentication capability information may include information indicating whether PSK is supported.

### - Encryption Capability Information

For example, the encryption capability information includes at least one of information indicating an encryption algorithm supported by the terminal apparatus 400 and information indicating a key generation scheme supported by the terminal apparatus 400.

For example, the information indicating the key generation scheme includes at least one of information indicating a pseudo-random function (PRF) supported by the terminal apparatus 400 and information indicating a Diffie-Hellman (DH) group supported by the terminal apparatus 400.

### - Specific Example

Figure 9 is an explanatory diagram for describing an example of authentication capability information and encryption capability information according to a first example embodiment. Referring Figure 9, four parameters which are Mutual Authentication, Encryption algorithm, Pseudo-Random Function and DH Group are illustrated. For example, the parameter of Mutual Authentication includes information indicating whether PSK is supported, information indicating whether RSA is supported, and information indicating whether DSA is supported. For example, the parameter of Encryption Algorithm includes information indicating whether AES-CBC 128bit is supported, information indicating whether AES-CBC 192bit is supported, information indicating whether AES-CBC 256bit is supported, information indicating whether AES-CCM 128bit is supported, and information indicating whether 3DES-CBC 168bit is supported. Note that the parameter of Pseudo-Random Function and the parameter of DH Group can be described as well.

Note that the capability information may be "UE network capability" or "UE security capability" specified in 3GPP TS 24.301 (or a part of it), or may be "UE Capability Information message" specified in 3GPP TS 36.331 or an information element (IE) included in this message. In this case, the authentication capability information and/or the encryption capability information may be information newly added to such an IE or such a message. Alternatively, the authentication capability information and/or the encryption capability information may be information included in another message or another IE.

### (1-2) Destination

### - First Core Network Node

For example, the mobile communication network includes the first core network node 600 (e.g. a MME), and the terminal apparatus 400 (the first communication processing unit 443) transmits the capability information to the first core network node 600. For example, the terminal apparatus 400 transmits a Non-Access Stratum (NAS) message including the capability information to the first core network node 600 via the base station 100. Then, the first core network node 600 (the communication processing unit 633) receives the capability information. The first core network node 600 (the storage unit 620) stores the capability information. Alternatively, the first core network node 600 (the communication processing unit 633) transmits the capability information to a Home Subscriber Server (HSS), and make the HSS store the capability information.

Furthermore, for example, the first core network node 600 (the information obtaining unit 631) obtains the capability information independently or in response to a request form the base station 100. Then, the first core network node 600 (the communication processing unit 633) transmits the capability information to the base station 100. For example, the first core network node 600 (the communication processing unit 633) transmits an S1 message including the capability information to the base station 100. The base station 100 (the second communication processing unit 145) receives the capability information from the first core network node 600.

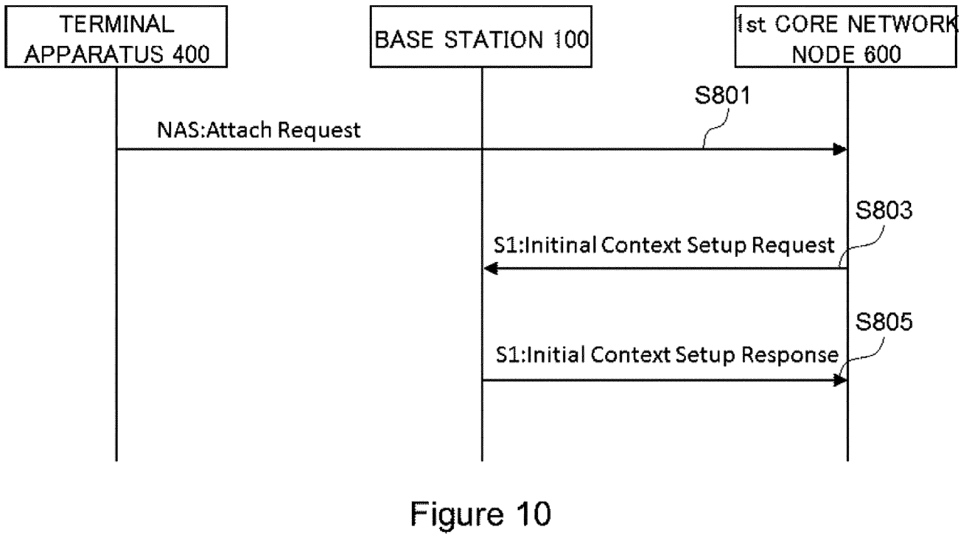

Figure 10 is a sequence diagram for describing a first example of a schematic flow of processing according to a first example embodiment. The terminal apparatus 400 transmits an Attach Request message including capability information to the first core network node 600 via base station 100 (S801). The first core network node 600 transmits an Initial Context Setup Request message including the capability information to the base station 100, and the base station 100 receives this message (S803). Then, the base station 100 transmits an Initial Context Setup Response message to the first core network node 600. In particular, authentication capability information and/or encryption capability information is newly added to the capability information, and the base station 100 can obtain the authentication capability information and/or the encryption capability information.

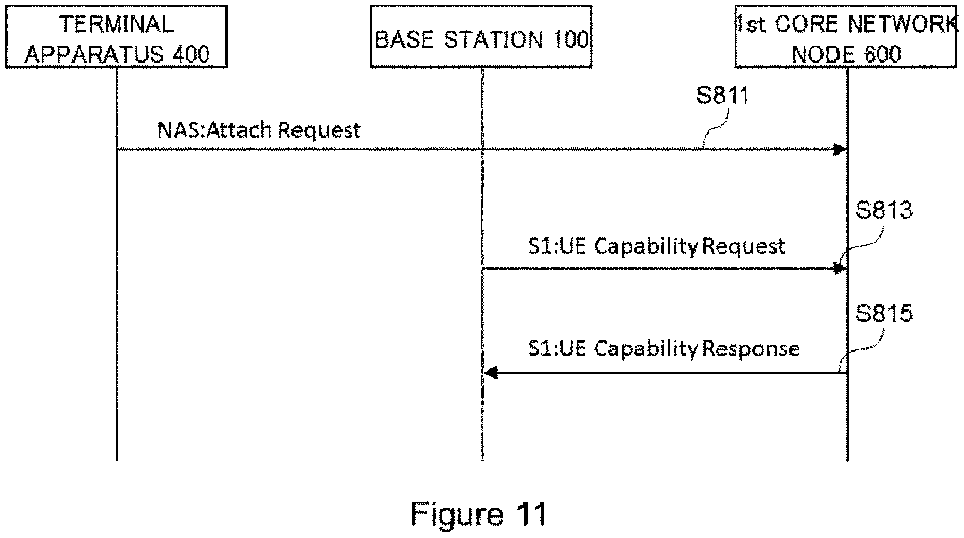

Figure 11 is a sequence diagram for describing a second example of a schematic flow of processing according to a first example embodiment. The terminal apparatus 400 transmits an Attach Request message including capability information to the first core network node 600 via the base station 100 (S811). The base station 100 transmits a UE Capability Request message to the first core network node 600 (e.g. after receiving an Initial Context Setup Request message) (S813). Then the first core network node 600 transmits a UE Capability Response message including the capability information, and the base station 100 receives this message (S815). For example, the above described UE Capability Request message and UE Capability Response message (or messages with other names) are newly defined as S1 messages and particularly includes authentication capability information and/or encryption capability information. Thus, it is possible for the base station 100 to obtain the authentication capability information and/or the encryption capability information.

Note that the terminal apparatus 400 may transmit a certificate used in the digital signature scheme with the authentication capability information to the first core network node 600, and the first core network node 600 may transmit the certificate with the authentication capability information to the base station 100.

### - Base Station

The mobile communication network may include the base station 100 (e.g. an eNB), and the terminal apparatus 400 (the first communication processing unit 443) may transmit the capability information to the base station 100. For example, the terminal apparatus 400 may transmit a Radio Resource Control (RRC) message including the capability information to the first core network node 600 via the base station 100. Then the base station 100 (the third communication processing unit 147) may receive the capability information. The base station 100 (the storage unit 130) may store the capability information.

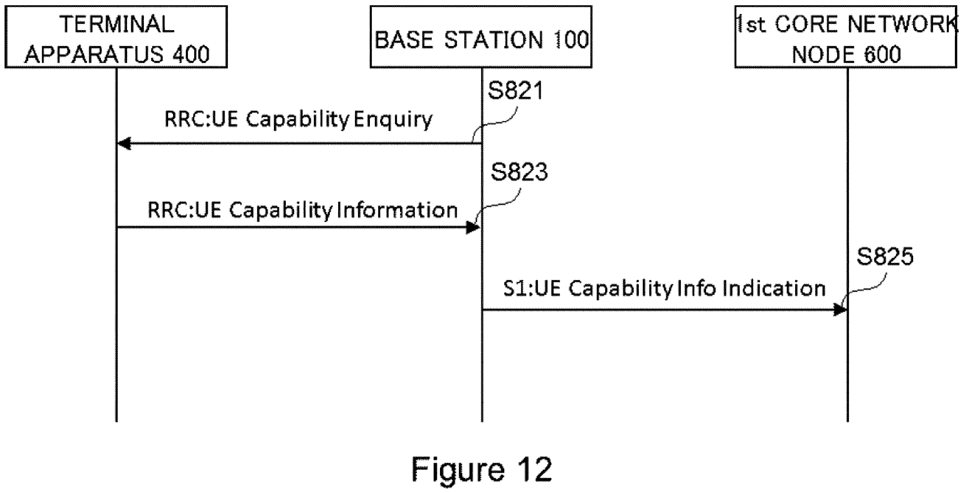

Figure 12 is a sequence diagram for describing a third example of a schematic flow of processing according to a first example embodiment. The base station 100 transmits a UE Capability Enquiry message to the terminal apparatus 400 (S821). Then, the terminal apparatus 400 transmits a UE Capability Information message including the capability information to the base station 100, and the base station 100 receives this message (S823). After that, the base station 100 transmits a UE Capability Info Indication message to the first core network node 600 (S825). In particular, authentication capability information and/or encryption capability information is newly added to the UE Capability Information message, and the base station 100 can obtain the authentication capability information and/or the encryption capability information.

Note that the terminal apparatus 400 may transmit a certificate used in the digital signature scheme with the authentication capability information to the base station 100.

### - Others

An authentication scheme and/or an encryption scheme may be predetermined per service class instead of transmitting the capability information from the terminal apparatus 400 to the mobile communication network as described above. For example, information indicating an authentication scheme and/or an encryption scheme per service class may be stored in the base station 100 (the storage unit 130) (for example as Operations, Administration, Maintenance (OAM) information). The base station 100 may read, from this information, an authentication scheme and/or an encryption scheme corresponding to a service class of the terminal apparatus 400. The service class may be a Quality of service Class Identifier (QCI) or an Internet Protocol (IP) flow.

As described above, the base station 100 may obtain the capability information (the authentication capability information and/or the encryption capability information in particular).

### (2) Selection of Authentication Scheme/Encryption Scheme

For example, the base station 100 (the information obtaining unit 141) obtains the capability information. Then the base station 100 (the control unit 149) selects an authentication scheme and/or an encryption scheme to be used for communication between the terminal apparatus 400 and the security gateway 200 based on the capability information.

### - Authentication Scheme

For example, the authentication scheme is a digital signature scheme. More specifically, for example, the authentication scheme is RSA or DSA.

Of course, the authentication scheme may be another scheme. For example, the authentication scheme may be PSK.

As an example, the base station 100 (the control unit 149) selects one of PSK, RSA and DSA.

### - Encryption Scheme

For example, the encryption scheme is an encryption scheme for IPsec. In other words, the encryption scheme is an encryption scheme for an IPsec tunnel between the terminal apparatus 400 and the security gateway 200.

More specifically, for example, the encryption scheme includes at least one of an encryption algorithm and a key generation scheme. Furthermore, for example, the key generation scheme includes at least one of a pseudo-random function (PRF) and a DH group.

As an example, the encryption scheme includes an encryption algorithm, a pseudo-random function (PRF) and a DH group. That is, the base station 100 (the control unit 149) selects an encryption algorithm, a pseudo-random function (PRF) and a DH group to be used for communication between the terminal apparatus 400 and the security gateway 200. More specifically, for example, the base station 100 (the control unit 149) selects an encryption algorithm, a pseudo-random function (PRF) and a DH group for an IPsec tunnel between the terminal apparatus 400 and the security gateway 200.

### - Per Service Class/Per User

For example, the authentication scheme and/or the encryption scheme are schemes per service class. That is, the base station 100 (the control unit 149) selects the authentication scheme and/or the encryption scheme per service class.

For example, the service class is a QCI, the base station 100 (the control unit 149) selects the authentication scheme and/or the encryption scheme per QCI (per bearer). Alternatively, the service class may be an IP flow, and the base station 100 (the control unit 149) may select the authentication scheme and/or the encryption scheme per IP flow.

This, for example, makes it possible to apply an authentication scheme and/or an encryption scheme which is different per service class. Security may be ensured more flexibly.

Note that, of course, the first example embodiment is not limited to this example. For example, the authentication scheme and/or the encryption scheme may be schemes per user (per terminal apparatus). That is, the base station 100 (the control unit 149) may select the authentication scheme and/or the encryption scheme per user (terminal apparatus).

### - Example of Selection Method

For example, the base station 100 (the control unit 149) selects an authentication scheme and/or an encryption scheme supported by both of the terminal apparatus 400 and the security gateway 200.

Furthermore, the base station 100 (the control unit 149) may select an authentication scheme and/or an encryption scheme based on a service class of the terminal apparatus 400. Specifically, when the service class of the terminal apparatus 400 requires higher level of security, the base station 100 (the control unit 149) may select a more secure authentication scheme and/or a more secure encryption scheme.

Alternatively, the base station 100 (the control unit 149) may select most secure one of authentication schemes and/or encryption schemes supported by both of the terminal apparatus 400 and the security gateway 200.

For example as described above, the base station 100 (the control unit 149) selects the authentication scheme and/or the encryption scheme. Note that the base station 100 (the control unit 149) generates scheme information indicating the authentication scheme and/or the encryption scheme.

### (3) Transmission and Reception of Scheme Information

The base station 100 (the information obtaining unit 141) obtains the scheme information indicating the authentication scheme and/or the encryption scheme (i.e. a selected authentication scheme and/or a selected encryption scheme). Then, the base station 100 (the first communication processing unit 143) transmits the scheme information to the security gateway 200. The security gateway 200 (the first communication processing unit 231) receives the scheme information from the base station 100. For example, a newly defined interface between the base station 100 and the security gateway 200 is used for transmission and reception of the scheme information.

This, for example, enables the security gateway 200 to use an authentication scheme and/or an encryption scheme selected by the base station 100.

Furthermore, for example, the base station 100 (the third communication processing unit 147) transmits the scheme information to the terminal apparatus 400. The terminal apparatus 400 (the first communication processing unit 443) receives the scheme information from the base station 100.

This, for example, enables the terminal apparatus 400 to use an authentication scheme and/or an encryption scheme selected by the base station 100.

For example, the base station 100 transmits the scheme information to the security gateway 200 and the terminal apparatus 400 per service class.

Note that, if the authentication scheme is the digital signature scheme (e.g. RSA or DSA), the base station 100 (the information obtaining unit 141) may obtain a certificate used in the digital signature scheme. Then, the base station 100 (the first communication processing unit 143) may transmit the certificate to the security gateway 200. The security gateway 200 (the first communication processing unit 231) may receive the certificate.

### (4) Operation based on Scheme Information

The security gateway 200 (the communication processing unit 233) performs mutual authentication and/or encryption for communication with the terminal apparatus 400 via a WLAN (the WLAN-AP 300) based on the scheme information. For example, the security gateway 200 (the second communication processing unit 233) performs mutual authentication with the terminal apparatus 400 according to an authentication scheme indicated by the scheme information. For example, the security gateway 200 (the second communication processing unit 233) generates an encryption key according to a key generation scheme indicated by the scheme information, and performs encryption according to an encryption algorithm indicated by the scheme information.

The terminal apparatus 400 (the second communication processing unit 445) performs authentication or encryption for communication with the security gateway 200 via a WLAN (the WLAN-AP 300) based on the scheme information. The specific operations of the terminal apparatus 400 is the same as the above described specific operations of the security gateway 200.

Note that the base station 100 may request release and resetting of an IPsec tunnel from the security gateway 200. In this case, when resetting an IPsec tunnel released by the security gateway 200, or when performing setting of a new IPsec tunnel, the terminal apparatus 400 may use an authentication scheme and/or an encryption scheme selected by the base station 100.

### - Flow of Processing (From Selection of Scheme to Operation based on Scheme Information)

Figure13 is a sequence diagram for describing a fourth example of a schematic flow of processing according to a first example embodiment.

The base station 100 selects an authentication scheme and/or an encryption scheme to be used for communication between the terminal apparatus 400 and the security gateway 200 based on capability information (S831).

The base station 100 transmits, to the security gateway 200, a Security Configuration Request message including scheme information indicating the authentication scheme and/or the encryption scheme (S833). The security gateway 200 receives this message (S833) and transmits a response message to the base station 100 (S835).

Furthermore, the base station 100 transmits a Security Configuration Request message including the scheme information to the terminal apparatus 400 (S837). The terminal apparatus 400 receives this message (S837) and transmits a response message to the base station 100 (S839).

Then, the security gateway 200 and the terminal apparatus 400 performs, based on the scheme information, mutual authentication and/or encryption for communicating with each other via a WLAN (S841, S843). More specifically, for example, the security gateway 200 and the terminal apparatus 400 performs, based on the scheme information, mutual authentication and/or encryption for an IPsec tunnel between the security gateway 200 and the terminal apparatus 400.

The first example embodiment has been described above. According to the first example embodiment, the terminal apparatus 400 transmits authentication capability information and/or encryption capability information to a network, the base station 100 selects an authentication scheme and/or an encryption scheme based on such information, and the security gateway uses the authentication scheme and/or the encryption scheme. This, for example, makes it possible to ensure security of communication via a WLAN more flexibly. As a result, the security may be improved.

### «5. Second Example Embodiment»

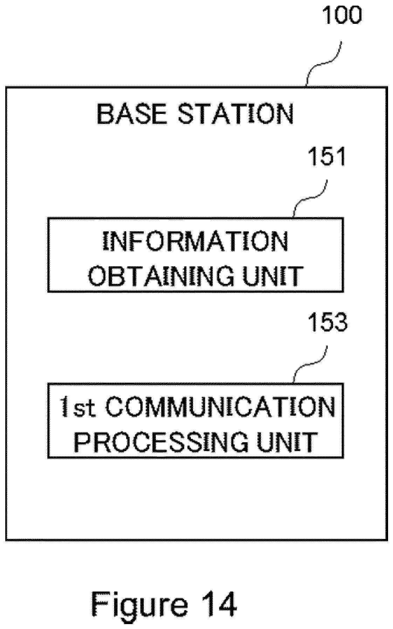

Subsequently, a second example embodiment of the present disclosure will be described with reference to Figure 14 to Figure 17. The above described first example embodiment is a specific example embodiment, while the second example embodiment is more generalized example embodiment.

### <5.1. Configuration of Base Station>

Firstly, an example of a configuration of the base station 100 according to the second example embodiment is described with reference to Figure 14. Figure 14 is a block diagram illustrating an example of a schematic configuration of the base station 100 according to the second example embodiment. Referring to Figure 14, the base station 100 includes an information obtaining unit 151 and the first communication processing unit 153.

Specific operations of the information obtaining unit 151 and the first communication processing unit 153 will be described later.

The information obtaining unit 151 and the first communication processing unit 153 may be implemented with a base band (BB) processor, another processor and/or the like. The information obtaining unit 151 and the first communication processing unit 153 may be implemented with the same processor or with respective different processors.

The base station 100 may include a memory that stores a program and one or more processors that are capable of executing the program, and the one or more processors may execute the operations of the information obtaining unit 151 and the first communication processing unit 153. The program may be a program for causing a processor to execute the operations of the information obtaining unit 151 and the first communication processing unit 153.

### <5.2. Configuration of Security Gateway>

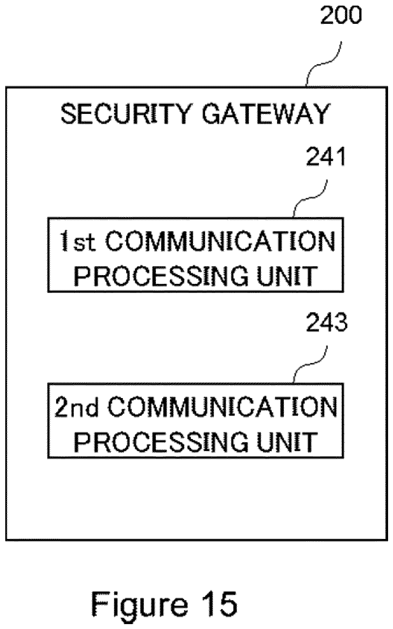

Firstly, an example of a configuration of the security gateway 200 according to the second example embodiment is described with reference to Figure 15. Figure 15 is a block diagram illustrating an example of a schematic configuration of the security gateway 200 according to the second example embodiment. Referring to Figure 15, the security gateway 200 includes a first communication processing unit 241 and a second communication processing unit 243.

Specific operations of the first communication processing unit 241 and the second communication processing unit 243 will be described later.

The first communication processing unit 241 and the second communication processing unit 243 may be implemented with a processor and/or the like. The first communication processing unit 241 and the second communication processing unit 243 may be implemented with the same processor or with respective different processors.

The security gateway 200 may include a memory that stores a program and one or more processors that are capable of executing the program, and the one or more processors may execute the operations of the first communication processing unit 241 and the second communication processing unit 243. The program may be a program for causing a processor to execute the operations of the first communication processing unit 241 and the second communication processing unit 243.

### <5.3. Configuration of Terminal Apparatus>

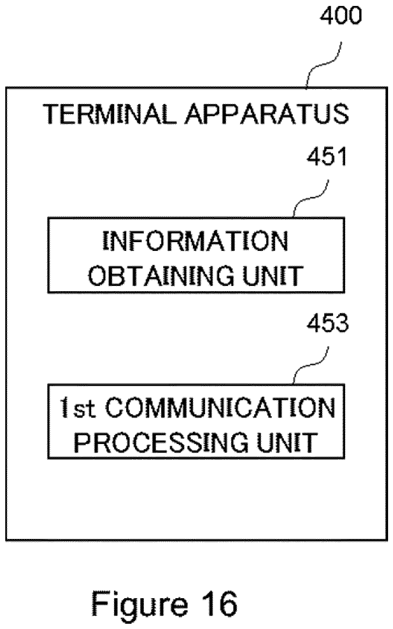

Firstly, an example of a configuration of the terminal apparatus 400 according to the second example embodiment is described with reference to Figure 16. Figure 16 is a block diagram illustrating an example of a schematic configuration of the terminal apparatus 400 according to the second example embodiment. Referring to Figure 16, the terminal apparatus 400 includes an information obtaining unit 451 and the first communication processing unit 453.

Specific operations of the information obtaining unit 451 and the first communication processing unit 453 will be described later.

The information obtaining unit 451 and the first communication processing unit 453 may be implemented with a base band (BB) processor, another processor and/or the like. The information obtaining unit 451 and the first communication processing unit 453 may be implemented with the same processor or with respective different processors.

The terminal apparatus 400 may include a memory that stores a program and one or more processors that are capable of executing the program, and the one or more processors may execute the operations of the information obtaining unit 451 and the first communication processing unit 453. The program may be a program for causing a processor to execute the operations of the information obtaining unit 451 and the first communication processing unit 453.

### <5.4. Configuration of First Core Network Node>

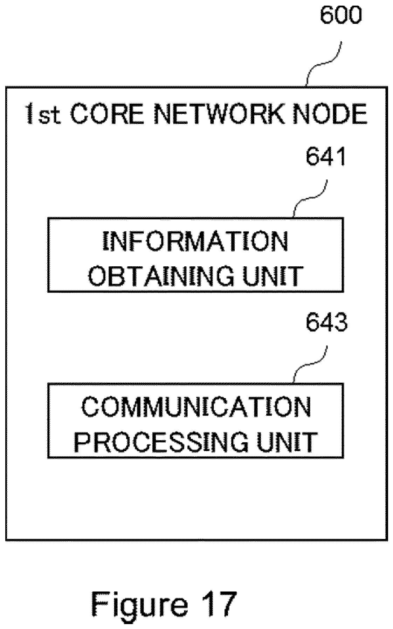

Firstly, an example of a configuration of the first core network node 600 according to the second example embodiment is described with reference to Figure 17. Figure 17 is a block diagram illustrating an example of a schematic configuration of the first core network node 600 according to the second example embodiment. Referring to Figure 17, the first core network node 600 includes an information obtaining unit 641 and a communication processing unit 643.

Specific operations of the information obtaining unit 641 and the communication processing unit 643 will be described later.

The information obtaining unit 641 and the communication processing unit 643 may be implemented with a processor and/or the like. The information obtaining unit 641 and the communication processing unit 643 may be implemented with the same processor or with respective different processors.

The first core network node 600 may include a memory that stores a program and one or more processors that are capable of executing the program, and the one or more processors may execute the operations of the information obtaining unit 641 and the communication processing unit 643. The program may be a program for causing a processor to execute the operations of the information obtaining unit 641 and the communication processing unit 643.

### <5.5. Technical Features>

Next, technical features of the second example embodiment are described.

The terminal apparatus 400 (the information obtaining unit 451) obtains capability information related to capability of the terminal apparatus 400. Then the terminal apparatus 400 (the first communication processing unit 453) transmits the capability information to a mobile communication network.

For example, the first core network node 600 (the information obtaining unit 641) obtains the capability information. Then, the first core network node 600 (the communication processing unit 643) transmits the capability information to the base station 100.

The base station 100 (the information obtaining unit 151) obtains scheme information indicating an authentication scheme and/or an encryption scheme to be used for communication between the terminal apparatus 400 and the security gateway 200. Then, the base station 100 (the first communication processing unit 153) transmits the scheme information to the security gateway 200. The security gateway 200 (the first communication processing unit 241) receives the scheme information from the base station 100.

The security gateway 200 (the second communication processing unit 243) performs mutual authentication and/or encryption for communication with the terminal apparatus 400 via a WLAN (the WLAN-AP 300) based on the scheme information.

Specific descriptions related to the above described operations are, for example, the same as the descriptions about these for the first example embodiment except difference of a part of references. Hence, overlapping descriptions are omitted here.

The second example embodiment has been described above. According to the second example embodiment, for example, it is possible to ensure security of communication via a WLAN more flexibly. As a result, the security may be improved.

While the example embodiments of the present disclosure have been described above, the present disclosure is not limited to these example embodiments. It will be understood by those skilled in the art that these example embodiments are merely examples and various modification/change can be made without departing from the scope and the spirit of the present disclosure.

For example, the steps in any processing described herein need not be performed chronologically in the order illustrated in the corresponding sequence diagram. For example, the steps of the processing may be performed in an order different from the order illustrated as the corresponding sequence diagram or may be performed in parallel. Moreover, one or some of the steps of the processing may be deleted, or one or more steps may be added to the processing.

In addition, an apparatus (e.g. one or more apparatuses (or units) out of a plurality of apparatuses (or units) constituting the base station, or a module for one of the plurality of apparatuses (or units)) including constituent elements of the base station described herein (e.g. the information obtaining unit, the first communication processing unit, the second communication processing unit, the third communication processing unit and/or the control unit) may be provided. An apparatus (e.g. a module for the security gateway) including constituent elements of the security gateway described herein (e.g. the first communication processing unit and/or the second communication processing unit) may be provided. An apparatus (e.g. a module for the terminal apparatus) including constituent elements of the terminal apparatus described herein (e.g. the information obtaining unit, the first communication processing unit and/or the second communication processing unit) may be provided. An apparatus (e.g. a module for the core network node) including constituent elements of the core network node described herein (e.g. the information obtaining unit and/or the communication processing unit) may be provided. Moreover, methods including processing of such constituent elements may be provided, and programs for causing processors to execute processing of such constituent elements may be provided. Furthermore, non-transitory computer readable recording media having recorded thereon the program may be provided. Of course, such apparatuses, modules, methods, programs and non-transitory computer readable recording media are also included in the present disclosure.

Some of or all the above-described example embodiments can be described as in the following Supplementary Notes, but are not limited to the following.

### (Supplementary Note 1)

A terminal apparatus comprising:
an information obtaining unit configured to obtain capability information related to capability of the terminal apparatus; and
a first communication processing unit configured to transmit the capability information to a mobile communication network,
wherein the capability information includes information indicating an authentication scheme supported by the terminal apparatus, or information indicating an encryption scheme for Security Architecture for Internet Protocol (IPsec) supported by the terminal apparatus.

### (Supplementary Note 2)

The terminal apparatus according to Supplementary Note 1, wherein the information indicating the authentication scheme includes information indicating a digital signature scheme supported by the terminal apparatus.

### (Supplementary Note 3)

The terminal apparatus according to Supplementary Note 2, wherein the information indicating the digital signature scheme includes at least one of information indicating whether Rivest Shamir Adleman (RSA) is supported and information indicating whether Digital Signature Algorithm (DSA) is supported.

### (Supplementary Note 4)

The terminal apparatus according to any one of Supplementary Notes 1 to 3, wherein the information indicating the encryption scheme includes at least one of information indicating an encryption algorithm supported by the terminal apparatus and information indicating a key generation scheme supported by the terminal apparatus.

### (Supplementary Note 5)

The terminal apparatus according to Supplementary Note 4, wherein the information indicating the key generation scheme includes at least one of information indicating a pseudo-random function supported by the terminal apparatus and information indicating a Diffie-Hellman (DH) group supported by the terminal apparatus.

### (Supplementary Note 6)

The terminal apparatus according to any one of Supplementary Notes 1 to 5, wherein
the mobile communication network includes a core network node, and
the first communication processing unit is configured to transmit the capability information to the core network node.

### (Supplementary Note 7)

The terminal apparatus according to any one of Supplementary Notes 1 to 6, wherein
the mobile communication network includes a base station, and
the first communication processing unit is configured to transmit the capability information to the base station.

### (Supplementary Note 8)

The terminal apparatus according to any one of Supplementary Notes 1 to 7, wherein
the mobile communication network includes a base station,
the first communication processing unit receives, from the base station, scheme information indicating an authentication scheme or an encryption scheme to be used for communication between the terminal apparatus and a security gateway via a wireless local area network, and
the terminal apparatus further comprises a second communication processing unit configured to perform authentication or encryption for communication with the security gateway via the wireless local area network based on the scheme information.

### (Supplementary Note 9)

A core network node comprising:
an information obtaining unit configured to obtain capability information related to capability of a terminal apparatus; and
a communication processing unit configured to transmit the capability information to a base station,
wherein the capability information includes information indicating an authentication scheme supported by the terminal apparatus, or information indicating an encryption scheme for IPsec supported by the terminal apparatus.

### (Supplementary Note 10)

A base station comprising:
an information obtaining unit configured to obtain scheme information indicating an authentication scheme or an encryption scheme to be used for communication between a terminal apparatus and a security gateway via a wireless local area network; and
a first communication processing unit configured to transmit the scheme information to the security gateway.

### (Supplementary Note 11)

The base station according to Supplementary Note 10, wherein the authentication scheme is a digital signature scheme.

### (Supplementary Note 12)

The base station according to Supplementary Note 11, wherein
the information obtaining unit is configured to obtain a certificate used in the digital signature scheme, and
the first communication processing unit is configured to transmit the certificate to the security gateway.

### (Supplementary Note 13)

The base station according to any one of Supplementary Notes 10 to 12, wherein the encryption scheme is an encryption scheme for IPsec.

### (Supplementary Note 14)

The base station according to any one of Supplementary Notes 10 to 13, wherein the encryption scheme includes at least one of an encryption algorithm and a key generation scheme.

### (Supplementary Note 15)

The base station according to Supplementary Note 14, wherein the key generation scheme includes at least one of a pseudo-random function and a Diffie-Hellman (DH) group.

### (Supplementary Note 16)

The base station according to any one of Supplementary Notes 10 to 15, wherein
the information obtaining unit configured to obtain capability information related to capability of the terminal apparatus,
the capability information includes information indicating an authentication scheme or an encryption scheme supported by the terminal apparatus, and
the base station further comprises a control unit configured to select the authentication scheme or the encryption scheme to be used for the communication between the terminal apparatus and the security gateway based on the capability information.

### (Supplementary Note 17)

The base station according to Supplementary Note 16, further comprising a second communication processing unit configured to receive the capability information from a core network node.

### (Supplementary Note 18)

The base station according to Supplementary Note 16, further comprising a third communication processing unit configured to receive the capability information from the terminal apparatus.

### (Supplementary Note 19)

The base station according any one of Supplementary Notes 10 to 18, wherein the authentication scheme or the encryption scheme is a scheme per service class.

### (Supplementary Note 20)

The base station according to Supplementary Note 19, wherein the service class is a quality of service class identifier (QCI) or an Internet Protocol (IP) flow.

### (Supplementary Note 21)

The base station according to any one of Supplementary Notes 10 to 20, further comprising a third communication processing unit configured to transmit the scheme information to the terminal apparatus.

### (Supplementary Note 22)

The base station according to any one of Supplementary Notes 10 to 21, wherein
the base station is an evolved Node B (eNB),
the terminal apparatus is a user equipment (UE), and
the security gateway is a LTE WLAN RAN Level Integration using IPSec Security Gateway (LWIP-SeGW).

### (Supplementary Note 23)

A security gateway comprising:
a first communication processing unit configured to receive, from a base station, scheme information indicating an authentication scheme or an encryption scheme to be used for communication between a terminal apparatus and the security gateway via a wireless local area network; and
a second communication processing unit configured to perform authentication or encryption for communication with the terminal apparatus via the wireless local area network based on the scheme information.

### (Supplementary Note 24)

A method comprising:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

### (Supplementary Note 25)

A program for causing a processor to execute:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

### (Supplementary Note 26)

A non-transitory computer readable recording medium having recorded thereon a program for causing a processor to execute:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

### (Supplementary Note 27)

An apparatus comprising:
an information obtaining unit configured to obtain capability information related to capability of a terminal apparatus; and
a first communication processing unit configured to transmit the capability information to a mobile communication network,
wherein the capability information includes information indicating an authentication scheme supported by the terminal apparatus, or information indicating an encryption scheme for Security Architecture for Internet Protocol (IPsec) supported by the terminal apparatus.

### (Supplementary Note 28)

An apparatus comprising:
a memory storing a program; and
one or more processors capable of executing the program,
wherein the program is a program for causing a processor to execute:
   obtaining capability information related to capability of a terminal apparatus; and
   transmitting the capability information to a mobile communication network,
   wherein the capability information includes information indicating an authentication scheme supported by the terminal apparatus, or information indicating an encryption scheme for IPsec supported by the terminal apparatus.

### (Supplementary Note 29)

An apparatus comprising:
a memory; and
one or more processors,
wherein the one or more processors are configured to:
   obtain capability information related to capability of a terminal apparatus; and
   transmit the capability information to a mobile communication network,
   wherein the capability information includes information indicating an authentication scheme supported by the terminal apparatus, or information indicating an encryption scheme for IPsec supported by the terminal apparatus.

### (Supplementary Note 30)

The apparatus according to any one of Supplementary Notes 27 to 29, wherein the apparatus is the terminal apparatus or a module for the terminal apparatus.

### (Supplementary Note 31)

A method comprising:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

### (Supplementary Note 32)

A program for causing a processor to execute:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

### (Supplementary Note 33)

A non-transitory computer readable recording medium having recorded thereon a program for causing a processor to execute:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

### (Supplementary Note 34)

An apparatus comprising:
an information obtaining unit configured to obtain capability information related to capability of a terminal apparatus; and
a communication processing unit configured to transmit the capability information to a base station,
wherein the capability information includes information indicating an authentication scheme supported by the terminal apparatus, or information indicating an encryption scheme for IPsec supported by the terminal apparatus.

### (Supplementary Note 35)

An apparatus comprising:
a memory storing a program; and
one or more processors capable of executing the program,
wherein the program is a program for causing a processor to execute:
   obtaining capability information related to capability of a terminal apparatus; and
   transmitting the capability information to a base station,
   wherein the capability information includes information indicating an authentication scheme supported by the terminal apparatus, or information indicating an encryption scheme for IPsec supported by the terminal apparatus.

### (Supplementary Note 36)

An apparatus comprising:
a memory; and
one or more processors,
wherein the one or more processors are configured to:
   obtain capability information related to capability of a terminal apparatus; and
   transmit the capability information to a base station,
   wherein the capability information includes information indicating an authentication scheme supported by the terminal apparatus, or information indicating an encryption scheme for IPsec supported by the terminal apparatus.

### (Supplementary Note 37)

The apparatus according to any one of Supplementary Notes 34 to 36, wherein the apparatus is a core network node or a module for a core network node.

### (Supplementary Note 38)

A method comprising:
obtaining scheme information indicating an authentication scheme or an encryption scheme to be used for communication between a terminal apparatus and a security gateway via a wireless local area network; and
transmitting the scheme information to the security gateway.

### (Supplementary Note 39)

A program for causing a processor to execute:
obtaining scheme information indicating an authentication scheme or an encryption scheme to be used for communication between a terminal apparatus and a security gateway via a wireless local area network; and
transmitting the scheme information to the security gateway.

### (Supplementary Note 40)

A non-transitory computer readable recording medium having recorded thereon a program for causing a processor to execute:
obtaining scheme information indicating an authentication scheme or an encryption scheme to be used for communication between a terminal apparatus and a security gateway via a wireless local area network; and
transmitting the scheme information to the security gateway.

### (Supplementary Note 41)

An apparatus comprising:
an information obtaining unit configured to obtain scheme information indicating an authentication scheme or an encryption scheme to be used for communication between a terminal apparatus and a security gateway via a wireless local area network; and
a first communication processing unit configured to transmit the scheme information to the security gateway.

### (Supplementary Note 42)

An apparatus comprising:
a memory storing a program; and
one or more processors capable of executing the program,
wherein the program is a program for causing a processor to execute:
   obtaining scheme information indicating an authentication scheme or an encryption scheme to be used for communication between a terminal apparatus and a security gateway via a wireless local area network; and
   transmitting the scheme information to the security gateway.

### (Supplementary Note 43)

An apparatus comprising:
a memory; and
one or more processors,
wherein the one or more processors are configured to:
   obtain scheme information indicating an authentication scheme or an encryption scheme to be used for communication between a terminal apparatus and a security gateway via a wireless local area network; and
   transmit the scheme information to the security gateway.

### (Supplementary Note 44)

The apparatus according to any one of Supplementary Notes 41 to 43, wherein the apparatus is a base station, one or more apparatuses out of a plurality of apparatuses constituting a base station, or a module of one of the plurality of apparatuses.

### (Supplementary Note 45)

A method comprising:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

### (Supplementary Note 46)

A program for causing a processor to execute:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

### (Supplementary Note 47)

A non-transitory computer readable recording medium having recorded thereon a program for causing a processor to execute:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

### (Supplementary Note 48)

An apparatus comprising:
a first communication processing unit configured to receive, from a base station, scheme information indicating an authentication scheme or an encryption scheme to be used for communication between a terminal apparatus and a security gateway via a wireless local area network; and
a second communication processing unit configured to perform authentication or encryption for communication with the terminal apparatus via the wireless local area network based on the scheme information.

### (Supplementary Note 49)

An apparatus comprising:
a memory storing a program; and
one or more processors capable of executing the program,
wherein the program is a program for causing a processor to execute:
   receiving, from a base station, scheme information indicating an authentication scheme or an encryption scheme to be used for communication between a terminal apparatus and a security gateway via a wireless local area network; and
   performing authentication or encryption for communication with the terminal apparatus via the wireless local area network based on the scheme information.

### (Supplementary Note 50)

An apparatus comprising:
a memory; and
one or more processors,
wherein the one or more processors are configured to:
   receive, from a base station, scheme information indicating an authentication scheme or an encryption scheme to be used for communication between a terminal apparatus and a security gateway via a wireless local area network; and
   perform authentication or encryption for communication with the terminal apparatus via the wireless local area network based on the scheme information.

### (Supplementary Note 51)

The apparatus according to any one of Supplementary Notes 48 to 50, wherein the apparatus is the security gateway or a module for the security gateway.

This application claims priority based on Japanese Patent Application No. 2016-215220 filed on November 2, 2016, the entire disclosure of which is incorporated herein.

### Industrial Applicability

In a mobile communication system, it is possible to ensure security of communication via a WLAN more flexibly.

### Reference Signs List

- 1: System
- 100: Base Station
- 141, 151: Information Obtaining Unit
- 143, 153: First Communication Processing Unit
- 145: Second Communication Processing Unit
- 147: Third Communication Processing Unit
- 149: Control Unit
- 200: Security Gateway
- 231, 241: First Communication Processing Unit
- 233, 243: Second Communication Processing Unit
- 300: Wireless Local Area Network Access Point (WLAN-AP)
- 400: Terminal Apparatus
- 441, 451: Information Obtaining Unit
- 443, 453: First Communication Processing Unit
- 445: Second Communication Processing Unit
- 500: Core Network
- 600: First Core Network Node
- 631, 641: Information Obtaining Unit
- 633, 643: Communication Processing Unit
- 700: Second Core Network Node

## Claims

1. A terminal apparatus comprising:
an information obtaining unit configured to obtain capability information related to capability of the terminal apparatus; and
a first communication processing unit configured to transmit the capability information to a mobile communication network,
wherein the capability information includes information indicating an authentication scheme supported by the terminal apparatus, or information indicating an encryption scheme for Security Architecture for Internet Protocol (IPsec) supported by the terminal apparatus.

2. The terminal apparatus according to claim 1, wherein the information indicating the authentication scheme includes information indicating a digital signature scheme supported by the terminal apparatus.

3. The terminal apparatus according to claim 2, wherein the information indicating the digital signature scheme includes at least one of information indicating whether Rivest Shamir Adleman (RSA) is supported and information indicating whether Digital Signature Algorithm (DSA) is supported.

4. The terminal apparatus according to any one of claims 1 to 3, wherein the information indicating the encryption scheme includes at least one of information indicating an encryption algorithm supported by the terminal apparatus and information indicating a key generation scheme supported by the terminal apparatus.

5. The terminal apparatus according to claim 4, wherein the information indicating the key generation scheme includes at least one of information indicating a pseudo-random function supported by the terminal apparatus and information indicating a Diffie-Hellman (DH) group supported by the terminal apparatus.

6. The terminal apparatus according to any one of claims 1 to 5, wherein
the mobile communication network includes a core network node, and
the first communication processing unit is configured to transmit the capability information to the core network node.

7. The terminal apparatus according to any one of claims 1 to 6, wherein
the mobile communication network includes a base station, and
the first communication processing unit is configured to transmit the capability information to the base station.

8. The terminal apparatus according to any one of claims 1 to 7, wherein
the mobile communication network includes a base station,
the first communication processing unit receives, from the base station, scheme information indicating an authentication scheme or an encryption scheme to be used for communication between the terminal apparatus and a security gateway via a wireless local area network, and
the terminal apparatus further comprises a second communication processing unit configured to perform authentication or encryption for communication with the security gateway via the wireless local area network based on the scheme information.

9. A core network node comprising:
an information obtaining unit configured to obtain capability information related to capability of a terminal apparatus; and
a communication processing unit configured to transmit the capability information to a base station,
wherein the capability information includes information indicating an authentication scheme supported by the terminal apparatus, or information indicating an encryption scheme for IPsec supported by the terminal apparatus.

10. A base station comprising:
an information obtaining unit configured to obtain scheme information indicating an authentication scheme or an encryption scheme to be used for communication between a terminal apparatus and a security gateway via a wireless local area network; and
a first communication processing unit configured to transmit the scheme information to the security gateway.

11. The base station according to claim 10, wherein the authentication scheme is a digital signature scheme.

12. The base station according to claim 11, wherein
the information obtaining unit is configured to obtain a certificate used in the digital signature scheme, and
the first communication processing unit is configured to transmit the certificate to the security gateway.

13. The base station according to any one of claims 10 to 12, wherein the encryption scheme is an encryption scheme for IPsec.

14. The base station according to any one of claims 10 to 13, wherein the encryption scheme includes at least one of an encryption algorithm and a key generation scheme.

15. The base station according to claim 14, wherein the key generation scheme includes at least one of a pseudo-random function and a Diffie-Hellman (DH) group.

16. The base station according to any one of claims 10 to 15, wherein
the information obtaining unit configured to obtain capability information related to capability of the terminal apparatus,
the capability information includes information indicating an authentication scheme or an encryption scheme supported by the terminal apparatus, and
the base station further comprises a control unit configured to select the authentication scheme or the encryption scheme to be used for the communication between the terminal apparatus and the security gateway based on the capability information.

17. The base station according to claim 16, further comprising a second communication processing unit configured to receive the capability information from a core network node.

18. The base station according to claim 16, further comprising a third communication processing unit configured to receive the capability information from the terminal apparatus.

19. The base station according any one of claims 10 to 18, wherein the authentication scheme or the encryption scheme is a scheme per service class.

20. The base station according to claim 19, wherein the service class is a quality of service class identifier (QCI) or an Internet Protocol (IP) flow.

21. The base station according to any one of claims 10 to 20, further comprising a third communication processing unit configured to transmit the scheme information to the terminal apparatus.

22. The base station according to any one of claims 10 to 21, wherein
the base station is an evolved Node B (eNB),
the terminal apparatus is a user equipment (UE), and
the security gateway is a LTE WLAN RAN Level Integration using IPSec Security Gateway (LWIP-SeGW).

23. A security gateway comprising:
a first communication processing unit configured to receive, from a base station, scheme information indicating an authentication scheme or an encryption scheme to be used for communication between a terminal apparatus and the security gateway via a wireless local area network; and
a second communication processing unit configured to perform authentication or encryption for communication with the terminal apparatus via the wireless local area network based on the scheme information.

24. A method comprising:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

25. A program for causing a processor to execute:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

26. A non-transitory computer readable recording medium having recorded thereon a program for causing a processor to execute:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

27. An apparatus comprising:
an information obtaining unit configured to obtain capability information related to capability of a terminal apparatus; and
a first communication processing unit configured to transmit the capability information to a mobile communication network,
wherein the capability information includes information indicating an authentication scheme supported by the terminal apparatus, or information indicating an encryption scheme for Security Architecture for Internet Protocol (IPsec) supported by the terminal apparatus.

28. An apparatus comprising:
a memory storing a program; and
one or more processors capable of executing the program,
wherein the program is a program for causing a processor to execute:
obtaining capability information related to capability of a terminal apparatus; and
transmitting the capability information to a mobile communication network,
wherein the capability information includes information indicating an authentication scheme supported by the terminal apparatus, or information indicating an encryption scheme for IPsec supported by the terminal apparatus.

29. An apparatus comprising:
a memory; and
one or more processors,
wherein the one or more processors are configured to:
obtain capability information related to capability of a terminal apparatus; and
transmit the capability information to a mobile communication network,
wherein the capability information includes information indicating an authentication scheme supported by the terminal apparatus, or information indicating an encryption scheme for IPsec supported by the terminal apparatus.

30. The apparatus according to any one of claims 27 to 29, wherein the apparatus is the terminal apparatus or a module for the terminal apparatus.

31. A method comprising:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

32. A program for causing a processor to execute:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

33. A non-transitory computer readable recording medium having recorded thereon a program for causing a processor to execute:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

34. An apparatus comprising:
an information obtaining unit configured to obtain capability information related to capability of a terminal apparatus; and
a communication processing unit configured to transmit the capability information to a base station,
wherein the capability information includes information indicating an authentication scheme supported by the terminal apparatus, or information indicating an encryption scheme for IPsec supported by the terminal apparatus.

35. An apparatus comprising:
a memory storing a program; and
one or more processors capable of executing the program,
wherein the program is a program for causing a processor to execute:
obtaining capability information related to capability of a terminal apparatus; and
transmitting the capability information to a base station,
wherein the capability information includes information indicating an authentication scheme supported by the terminal apparatus, or information indicating an encryption scheme for IPsec supported by the terminal apparatus.

36. An apparatus comprising:
a memory; and
one or more processors,
wherein the one or more processors are configured to:
obtain capability information related to capability of a terminal apparatus; and
transmit the capability information to a base station,
wherein the capability information includes information indicating an authentication scheme supported by the terminal apparatus, or information indicating an encryption scheme for IPsec supported by the terminal apparatus.

37. The apparatus according to any one of claims 34 to 36, wherein the apparatus is a core network node or a module for a core network node.

38. A method comprising:
obtaining scheme information indicating an authentication scheme or an encryption scheme to be used for communication between a terminal apparatus and a security gateway via a wireless local area network; and
transmitting the scheme information to the security gateway.

39. A program for causing a processor to execute:
obtaining scheme information indicating an authentication scheme or an encryption scheme to be used for communication between a terminal apparatus and a security gateway via a wireless local area network; and
transmitting the scheme information to the security gateway.

40. A non-transitory computer readable recording medium having recorded thereon a program for causing a processor to execute:
obtaining scheme information indicating an authentication scheme or an encryption scheme to be used for communication between a terminal apparatus and a security gateway via a wireless local area network; and
transmitting the scheme information to the security gateway.

41. An apparatus comprising:
an information obtaining unit configured to obtain scheme information indicating an authentication scheme or an encryption scheme to be used for communication between a terminal apparatus and a security gateway via a wireless local area network; and
a first communication processing unit configured to transmit the scheme information to the security gateway.

42. An apparatus comprising:
a memory storing a program; and
one or more processors capable of executing the program,
wherein the program is a program for causing a processor to execute:
obtaining scheme information indicating an authentication scheme or an encryption scheme to be used for communication between a terminal apparatus and a security gateway via a wireless local area network; and
transmitting the scheme information to the security gateway.

43. An apparatus comprising:
a memory; and
one or more processors,
wherein the one or more processors are configured to:
obtain scheme information indicating an authentication scheme or an encryption scheme to be used for communication between a terminal apparatus and a security gateway via a wireless local area network; and
transmit the scheme information to the security gateway.

44. The apparatus according to any one of claims 41 to 43, wherein the apparatus is a base station, one or more apparatuses out of a plurality of apparatuses constituting a base station, or a module of one of the plurality of apparatuses.

45. A method comprising:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

46. A program for causing a processor to execute:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

47. A non-transitory computer readable recording medium having recorded thereon a program for causing a processor to execute:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

48. An apparatus comprising:
a first communication processing unit configured to receive, from a base station, scheme information indicating an authentication scheme or an encryption scheme to be used for communication between a terminal apparatus and a security gateway via a wireless local area network; and
a second communication processing unit configured to perform authentication or encryption for communication with the terminal apparatus via the wireless local area network based on the scheme information.

49. An apparatus comprising:
a memory storing a program; and
one or more processors capable of executing the program,
wherein the program is a program for causing a processor to execute:
receiving, from a base station, scheme information indicating an authentication scheme or an encryption scheme to be used for communication between a terminal apparatus and a security gateway via a wireless local area network; and
performing authentication or encryption for communication with the terminal apparatus via the wireless local area network based on the scheme information.

50. An apparatus comprising:
a memory; and
one or more processors,
wherein the one or more processors are configured to:
receive, from a base station, scheme information indicating an authentication scheme or an encryption scheme to be used for communication between a terminal apparatus and a security gateway via a wireless local area network; and
perform authentication or encryption for communication with the terminal apparatus via the wireless local area network based on the scheme information.

51. The apparatus according to any one of claims 48 to 50, wherein the apparatus is the security gateway or a module for the security gateway.
